# EUROPEAN PATENT SPECIFICATION

(11) **EP 2 664 505 B1**
(45) Date of publication and mention of the grant of the patent: **21.11.2018**
(21) Application number: 12168406.2
(22) Date of filing: 17.05.2012
(51) Int. Cl.: B60T 7/14, B60T 15/04, B60T 17/18, B60T 17/22, B60T 7/08

(54) **System for controlling the engagement of a parking brake in a pneumatic braking system**
System zur Steuerung des Eingriffs einer Feststellbremse in einer pneumatischen Bremsanlage
Système pour commander l'engagement d'un frein à main dans un système de freinage pneumatique

(43) Date of publication of application: 20.11.2013
(73) Proprietor: IVECO S.p.A., 10156 Torino (IT)
(72) Inventor: Diepold, Klaus Dieter, 89075 Ulm (DE)
(74) Representative: Franzolin, Luigi

(56) References cited:
- WO-A1-2007/043957
- WO-A2-00/15480
- DE-A1-102010 002 507
- GB-A- 1 526 573
- GB-A- 2 478 771
- US-A1- 2002 189 882

## Description

### Application field of the invention

The present invention refers to the field of the systems for controlling the engagement of the parking brake in vehicles having the brakes controlled by a pneumatic circuit, especially heavy vehicles.

### Description of the prior art

WO2007043957 shows an acoustic signalling system addressed to the vehicle's driver when the following conditions are verified:
A) engine is started,
B) driver's door is open,
C) neither the accelerator pedal, nor the clutch pedal, nor the brake pedal are pressed
D) gear is in neutral,
E) the parking brake is not engaged.

It is important to add further details on the meaning of the characteristic D).

Paragraph [0013] specifies that the parking brake is engaged when the pressure in the pneumatic circuit controlling the brakes is below a certain level.

Indeed, according to the technical regulations ECE R13, a warning light in the dashboard is turned on depending on the pressure level reached in the pneumatic circuit controlling the brakes. In particular, the warning light turns on to signal the engagement of the parking brake only when the pressure is below a predetermined value.

WO2007043957, in paragraph [0021], specifies that heavy vehicles in conformity with the aforementioned regulations, are in themselves equipped with a signalling system and thus any further signalling is inhibited.

Such method for managing the additional signalling can be improved in terms of safety. GB 2478771 A shows a signalling system capable to activate signalling means at when the vehicle door is open and the handbrake lever is not completely engaged.

### Summary of the invention

Therefore, the aim of the present invention is to improve the safety of the signalling systems known in the art.

The object of the present invention is to provide a system for controlling the engagement of the parking brake in a pneumatic braking system, according to claim 1.

According to the present invention, the system for controlling the engagement of the parking brake is applied to the braking systems of the pneumatic type, in particular of heavy vehicles. Such pneumatic braking systems comprise a lever that can rotate around a respective fulcrum between a first release position and a second engagement position of the parking brake. The lever controls a vent valve of the braking system, so that it is fully open at least in said second engagement position. In an intermediate position between said two positions of the lever, a peak of counteracting torque is present opposing the commutation of the lever. The control system according to the present invention comprises means for detecting an open condition of a driver's door (alpha), means for detecting the position of said lever and signalling means, activated when said door is open and said lever is not in said second position.

A particular object of the present invention is a method for controlling the engagement of the parking brake in a pneumatic braking system, as described more fully in the claims, which are an integral part of the present description.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 shows an engagement lever of a parking brake,
figure 2 shows a diagram of a counteracting torque profile of the lever of figure 1 when it rotates with respect to a respective fulcrum;
figures from 3 to 5 show examples of flowcharts illustrating alternative embodiments of control methods according to the present invention.

In the figures the same reference numbers and letters identify the same elements or components.

### Detailed description of preferred embodiments of the invention

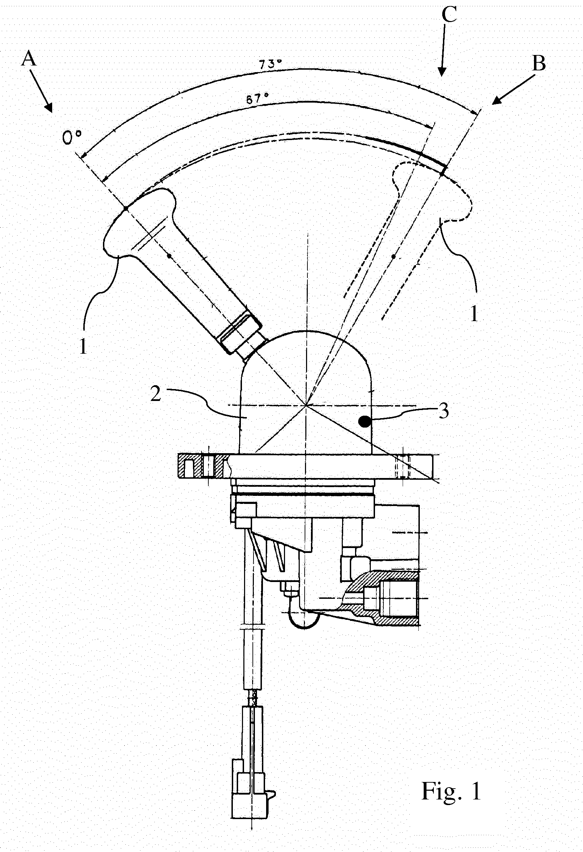

Figure 1 shows an engagement lever 1 of the parking brake of a vehicle having a pneumatic braking system, which is typical, but not exclusive, of heavy vehicles. The lever 1 is constrained to a support element 2 defining a fulcrum, with respect to which it can be moved from a fully released position A of the parking brake (leftward rotation in the figure) and an engagement position B of the parking brake (rightward rotation in the figure), the lever 1 being shown in this position by a dotted line.

A first angle of rotation of 0°, for example, is associated to the fully released position of the parking brake.

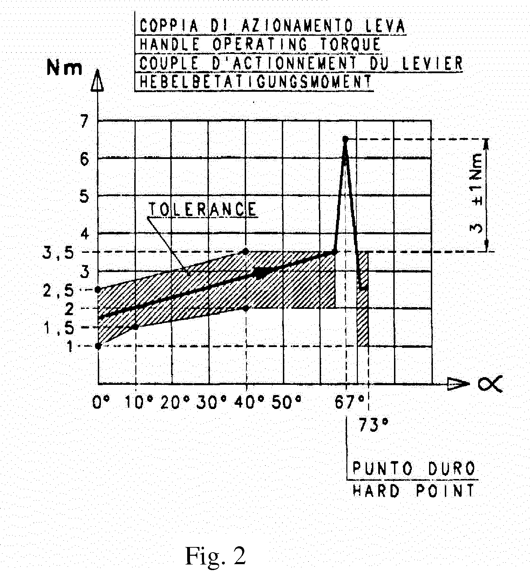

During the rotation of the lever 1 towards the engagement position B of the parking brake, the counteracting torque of the lever 1 opposing the action exerted by the driver has, for example, the profile shown in figure 2.

Figure 2 shows the profile of the counteracting torque exerted by the engagement lever of the parking brake. It can be seen that such counteracting torque profile, expressed in Nm, has a peak at a third angle of rotation C of the lever, intermediate between A and B, for example fixed at 67°. The counteracting torque decreases quickly between the portion C corresponding to the third angle of rotation, and the position B placed for example at 73°.

At the position C of the lever 1, or immediately before, the vent valve of the pneumatic circuit begins opening. Consequently, the vent valve is fully opened at or immediately before the position B of the lever 1.

In general, the rotation of the lever 1 occurs on a plane parallel to the longitudinal development of the vehicle, namely parallel to the travelling direction.

Such specific counteracting torque profile has been adopted in order to prevent a movement the lever to the position A due to an accidental actuation of the lever 1 or due to the force of gravity acting on the lever itself, when the vehicle is parked uphill (or downhill).

Consider also that, when the vehicle is left with the engine started, the vibrations propagating from the internal combustion engine to the whole cabin may be remarkable, facilitating the disengagement of the parking brake.

Thus, such counteracting torque profile of the lever of the parking brake contributes to the safety of the vehicle.

If the driver inadvertently moves the lever 1 exactly in position C, such position of the lever 1 is unstable.

Since the vent valve of the pneumatic circuit is at least partially open, even though not completely, in the space of some fractions of a second the pressure within the pneumatic circuit drops until it provokes the turning on of the warning lights in the dashboard and the clamping of the brakes, as stated in the technical regulations of the field.

According to the present invention, a further signalling is given when the driver's door opens and the lever 1 is not in the engagement position B of the parking brakes, which substantially corresponds to the end of stroke of the lever.

To this end, a sensor 3 is placed on the lever itself 1 or on the support 2, so that it detects the end of stroke of the lever, namely the reaching of the position B.

Such sensor may be of any type: microswitch sensor, capacitive sensor, resistive sensor, etc..

A switch/sensor (not shown in the figures), may be placed also in the driver's door.

Furthermore, a buzzer and/or a warning light, for example additional, may be provided.

In general, the sensor in the driver's door is already present in a vehicle, as well as the buzzer, thus the present invention may be implemented without any massive intervention on the onboard components.

Such sensors/switches and such buzzer/warning light may be connected to processing means (not shown in the figures) or to a vehicular control unit already present in the vehicle and appropriately configured to perform the control method according to what is described below.

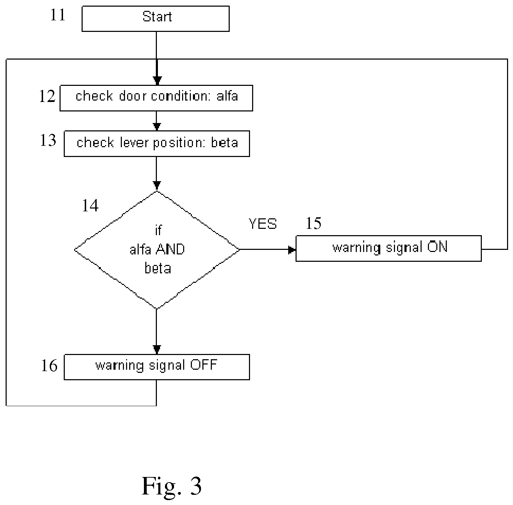

Figure 3 shows a flowchart wherein, at steps 12 and 13, a control on the condition "open door" (verification of condition alpha) and on the condition "lever 1 NOT in position B" (verification of condition beta) is performed.

If both conditions are verified (step 14), then a signalling, preferably acoustic, is given (step 15), otherwise such signalling is inhibited and the method is iteratively restarted from the beginning (start, step 11).

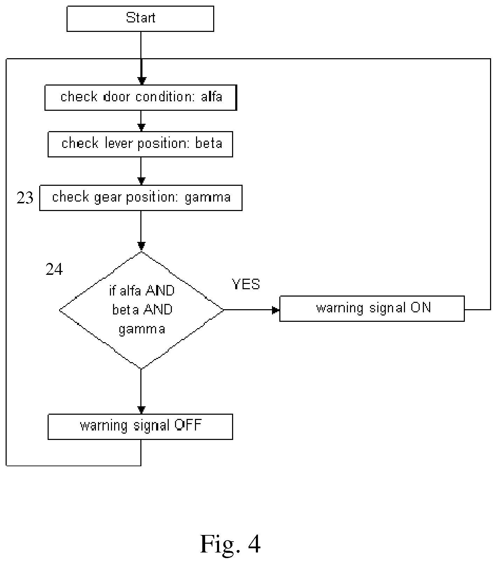

According to a preferred alternative embodiment of the invention, figure 4, such signalling is given when the gear is also in neutral (verification of condition gamma).

In figure 4, only the new or varied blocks compared to figure 3 are indicated by numbers, the others being left unchanged.

In particular, the step of the acquisition of the condition of the gear (step 23) has been added and the control (step 24) has been updated adding in AND also the verification of such further condition together with the ones previously considered.

According to a further alternative embodiment of the invention, such signalling is given when the gear is in neutral and neither the accelerator pedal, nor the clutch pedal, not the brake pedal are pressed. Such conditions may be considered separately or together. For convenience, delta indicates an overall condition wherein all the aforementioned conditions are verified:
- the accelerator pedal is not pressed, namely it is released,
- the clutch pedal is not pressed, namely it is released,
- the service brake pedal is not pressed, namely it is released.

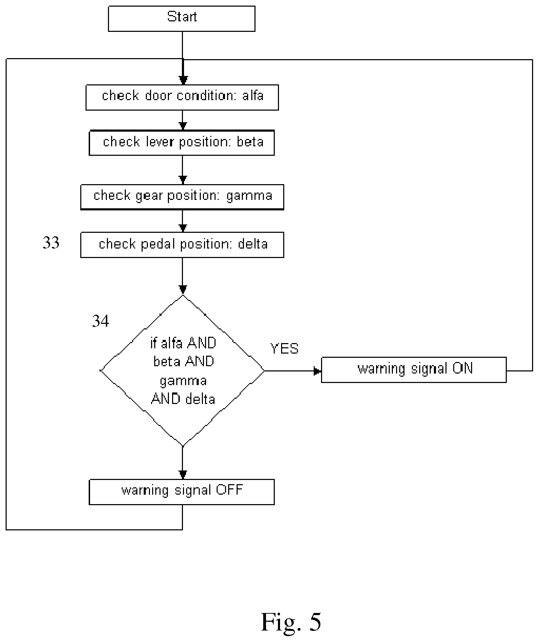

Figure 5 shows a flowchart integrating such further details. Also in this case, only the new or varied blocks have been numbered, the others being left unchanged compared to figure 4.

In particular the aforementioned condition delta (step 33) is further checked, and if it is verified (step 34), the aforementioned signalling is activated (step 15).

In general, the alternative embodiments of the method for controlling the signalling system are independent from the operating conditions of the engine, since the air in the accumulation tank is usually sufficient to open the brakes, even when the engine is stopped.

The present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

The advantages deriving from the use of this invention are evident.

It is evident that the present invention allows to overcome the problems of unstableness of the pneumatic circuits controlling the brakes, avoiding dangerous situations wherein the brake may be disengaged when the driver is outside the vehicle.

## Claims

1. System for controlling the engagement of the parking brake in a pneumatic braking system, the braking system comprising a lever (1) that can be rotated around a respective fulcrum (2) between a first release position (A) and a second predetermined engagement position (B) of the parking brake, the lever (1) controlling a vent valve of the braking system, so that it is fully open at least in said second engagement position (B); at least in an intermediate position (C) of the lever, between said two positions (A, B), a peak of counteracting torque is present opposing to the commutation of the lever (1), the control system comprising
- means for detecting an open condition of a driver's door (alpha),
- means for detecting at least one condition wherein said parking brake engagement lever (1) is not in said predetermined engagement position (B) of the parking brake (beta),
- signalling means, activated when said door is open and said lever (1) is not in said second position (B).

2. System according to claim 1, further comprising means for detecting a gear neutral condition (condition gamma), and wherein said signalling means are activated when also said gear neutral condition is verified.

3. System according to claim 2, further comprising at least one of the following
- means for detecting a release condition (i) of an accelerator pedal,
- means for detecting at least a release condition (ii) of a clutch pedal,
- means for detecting at least a release condition (iii) of a service brake pedal,
and wherein said signalling means are activated when also at least one of said release conditions (i - iii) is verified.

4. System according to any of the previous claims, further comprising processing means electrically connected with said detecting means and said signalling means in order to command such signalling means in relation to the conditions (alpha, beta, gamma) detected by the detecting means themselves.

5. System according to any of the previous claims, wherein said counteracting torque decreases quickly between said peak (C) and said second engagement position (B).

6. Method for controlling the engagement of the parking brake in a pneumatic braking system, according to any of the previous claims from 1 to 5, comprising the following steps:
- detecting an open condition of a driver's door (alpha),
- detecting a condition wherein a parking brake engagement lever (1) is not in a predetermined engagement position (B) of the parking brake (beta),
- activation of the signalling means when both the previous conditions (alpha, beta) are verified.

7. Method according to claim 6, further comprising the step of detecting a condition of gear in neutral (gamma), and wherein said activation of the signalling means is commanded when also said condition of neutral gear is verified.

8. Method according to claim 7, further comprising the step of detecting at least one of the following conditions:
- release (i) of the accelerator pedal,
- release (ii) of the clutch pedal,
- release (iii) of the service brake pedal,
and wherein said activation of the signalling means is commanded when also at least one of the release conditions (i - iii) is verified.

9. Computer program comprising program code means suitable for performing the steps of any claim from 7 to 8, when such program is run on a computer.

10. Computer-readable means comprising a recorded program, said computer-readable means comprising program code means suitable for performing the steps according to the claims from 7 to 8, when said program is run on a computer.

## Patentansprüche

1. System zur Steuerung des Eingriffs einer Feststellbremse in einer pneumatischen Bremsanlage, wobei das Bremssystem einen Hebel (1) umfasst, der um einen entsprechenden Drehpunkt (2) zwischen einer ersten gelösten Position (A) und einer zweiten vorgegebenen greifenden Position (B) der Feststellbremse hin- und hergeschwenkt werden kann, wobei der Hebel (1) ein Entlüftungsventil des Bremssystems kontrolliert, so dass dieses wenigstens in der zweiten greifenden Position (B) ganz geöffnet ist; wobei wenigstens in einer Zwischenstellung (C) des Hebels zwischen den zwei Positionen (A, B) ein Maximum eines entgegenwirkenden Drehmoments vorhanden ist, welches der Umschaltung des Hebels (1) entgegenwirkt, wobei das Steuersystem folgendes umfasst:
- Mittel zur Detektion eines Öffnungszustands einer Fahrertür (alpha),
- Mittel zur Detektion wenigstens eines Zustands, in dem der Feststellbremseneingriffshebel (1) nicht in der vorgegebenen greifenden Position (B) der Feststellbremse (beta) ist,
- Anzeigemittel, die aktiviert sind, wenn die Tür geöffnet ist und der Hebel (1) sich nicht in der zweiten Position (B) befindet.

2. System gemäß Anspruch 1, weiter umfassend Mittel zur Detektion eines neutralen Getriebezustands (Zustand gamma), wobei die Anzeigemittel aktiviert sind, wenn auch der neutrale Getriebezustand verifiziert ist.

3. System gemäß Anspruch 2, weiter umfassend wenigstens eines der folgenden Mittel:
- Mittel zur Detektion eines Lösezustands (i) eines Fahrpedals,
- Mittel zur Detektion wenigstens eines Lösezustands (ii) eines Kupplungspedals,
- Mittel zur Detektion wenigstens eines Lösezustands (iii) eines Betriebsbremspedals,
wobei die Anzeigemittel aktiviert sind, wenn auch wenigstens einer der Lösezustände (i-iii) verifiziert ist.

4. System gemäß einem der vorhergehenden Ansprüche, weiter umfassend Prozessmittel, die elektrisch mit den Detektionsmitteln und den Anzeigemitteln verbunden sind zur Ansteuerung der Anzeigemittel in Relation zu den durch die Detektionsmittel selbst detektierten Zuständen (alpha, beta, gamma).

5. System gemäß einem der vorhergehenden Ansprüche, wobei das entgegenwirkende Drehmoment schnell zwischen dem Maximum (C) und der zweiten greifenden Position (B) abnimmt.

6. Verfahren zur Steuerung des Eingreifens einer Feststellbremse in ein pneumatisches Bremssystem gemäß einem der vorhergehenden Ansprüche 1 bis 5, umfassend die folgenden Schritte:
- Detektion eines Öffnungszustands einer Fahrertür (alpha),
- Detektion eines Zustands, in dem ein Feststellbremseneingriffshebel (1) nicht in einer vorgegebenen eingreifenden Position (B) der Feststellbremse (beta) ist,
- Aktivierung der Anzeigemittel, wenn beide der vorhergehenden Zustände (alpha, beta) verifiziert sind.

7. Verfahren gemäß Anspruch 6, weiter umfassend den Schritt der Detektion eines neutralen Getriebezustands (gamma), wobei die Aktivierung der Anzeigemittel ausgelöst wird, wenn auch der neutrale Getriebezustand verifiziert ist.

8. Verfahren gemäß Anspruch 7, weiter umfassend den Schritt der Detektion von wenigstens einem der folgenden Zustände:
- Lösen (i) des Fahrpedals,
- Lösen (ii) des Kupplungspedals,
- Lösen (iii) des Betriebsbremspedals,
wobei die Aktivierung der Anzeigemittel befohlen wird, wenn auch wenigstens einer der Lösezustände (i-iii) verifiziert ist.

9. Computerprogramm, umfassend Programmcodemittel, geeignet zur Ausführung der Schritte von einem der Ansprüche 7 bis 8, wenn das Programm auf einem Computer ausgeführt wird.

10. Computer-lesbare Mittel, umfassend ein aufgenommenes Programm, wobei die computer-lesbaren Mittel Programmcodemittel umfassen, geeignet zur Ausführung der Schritte gemäß einem der Ansprüche 7 bis 8, wenn das Programm auf einem Computer ausgeführt wird.

## Revendications

1. Système pour commander la mise en prise du frein à main dans un système de freinage pneumatique, le système de freinage comprenant un levier (1) qui peut être mis en rotation autour d'un pivot respectif (2) entre une première position de relâchement (A) et une seconde position de prise (B) prédéterminée du frein à main, le levier (1) commandant une soupape d'évacuation du système de freinage, de telle sorte qu'elle est totalement ouverte au moins dans ladite seconde position de prise (B) ; au moins dans une position intermédiaire (C) du levier, entre lesdites deux positions (A, B), un pic de couple antagoniste est présent en opposition à la commutation du levier (1), le système de commande comprenant
- un moyen pour détecter un état ouvert d'une porte du conducteur (alpha),
- un moyen pour détecter au moins un état dans lequel ledit levier (1) de mise en prise de frein à main n'est pas dans ladite position de prise (B) prédéterminée du frein à main (bêta),
- un moyen de signalisation, activé quand ladite porte est ouverte et ledit levier (1) n'est pas dans ladite seconde position (B).

2. Système la revendication 1, comprenant en outre un moyen pour détecter un état neutre d'engrenage (état gamma), et dans lequel ledit moyen de signalisation est activé quand ledit état neutre d'engrenage est également vérifié.

3. Système la revendication 2, comprenant en outre au moins un des suivants
- un moyen pour détecter un état de relâchement (i) d'une pédale d'accélérateur,
- un moyen pour détecter au moins un état de relâchement (ii) d'une pédale d'embrayage,
- un moyen pour détecter au moins un état de relâchement (iii) d'une pédale de frein de service,
et dans lequel ledit moyen de signalisation est activé quand au moins un desdits états de relâchement (i-iii) est également vérifié.

4. Système l'une quelconque des revendications précédentes, comprenant en outre un moyen de traitement électriquement connecté auxdits moyens de détection et audit moyen de signalisation afin de commander un tel moyen de signalisation par rapport aux états (alpha, beta, gamma) détectés par les moyens de détection eux-mêmes.

5. Système l'une quelconque des revendications précédentes, dans lequel ledit couple antagoniste diminue rapidement entre ledit pic (C) et ladite seconde position de prise (B).

6. Procédé pour commander la mise en prise du frein à main dans un système de freinage pneumatique, selon l'une quelconque des revendications précédentes 1 à 5, comprenant les étapes suivantes :
- la détection d'un état ouvert d'une porte du conducteur (alpha),
- la détection d'un état dans lequel un levier (1) de mise en prise de frein à main n'est pas dans une position de prise (B) prédéterminée du frein à main (bêta),
- l'activation du moyen de signalisation quand les états précédents (alpha, bêta) sont tous les deux vérifiés.

7. Procédé selon la revendication 6, comprenant en outre l'étape de détection d'un état d'engrenage en neutre (gamma), et dans lequel ladite activation du moyen de signalisation est commandée quand ledit état d'engrenage neutre est également vérifié.

8. Procédé selon la revendication 7, comprenant en outre l'étape de détection d'au moins un des états suivants :
- relâchement (i) de la pédale d'accélérateur,
- relâchement (ii) de la pédale d'embrayage,
- relâchement (iii) de la pédale de frein de service,
et dans lequel ladite activation du moyen de signalisation est commandée quand au moins un des états de relâchement (i-iii) est également vérifié.

9. Programme informatique comprenant un moyen de code de programme adapté pour effectuer les étapes selon l'une quelconque des revendications 7 ou 8, quand un tel programme est exécuté sur un ordinateur.

10. Moyen lisible sur ordinateur comprenant un programme enregistré, ledit moyen lisible sur ordinateur comprenant un moyen de code de programme approprié pour effectuer les étapes selon les revendications 7 ou 8, quand ledit programme est exécuté sur un ordinateur.
